(19) Europäisches Patentamt
European Patent Office
Office européen des brevets

(11) Publication number: **0 111 811**
**A2**

(12) **EUROPEAN PATENT APPLICATION**

(21) Application number: 83112202.3

(22) Date of filing: 05.12.83

(51) Int. Cl.³: C 08 K 5/13
C 08 K 5/17, C 08 L 71/04

(30) Priority: 20.12.82 US 451183

(43) Date of publication of application: 27.06.84 Bulletin 84/26

(84) Designated Contracting States: DE FR GB IT NL

(71) Applicant: GENERAL ELECTRIC COMPANY
1 River Road
Schenectady New York 12305(US)

(72) Inventor: Olander, Walter Karl
148 Greens Farms Road
Westport Connecticut 06880(US)

(74) Representative: Catherine, Alain et al,
GETSCO 42, avenue Montaigne
F-75008 Paris(FR)

(54) **Stabilizer system and polyphenylene ether compositions stabilized with said system.**

(57) There are provided stabilizer systems comprising a combination of a hindered phenol and a tertiary amine, which inhibits thermal oxidation, and polyphenylene ether compositions stabilized with said system against thermal oxidation. The components of the system act synergistically to increase the thermal oxidative stability of polypheylene ether compositions over that attendant on the independent use of a hindered phenol or tertiary amine. A preferred stabilizer system or combination comprises a mixture of butylatedhydroxy toluene as the hindered phenol and of triethanolamine as the tertiary amine. A preferred stabilizer polyphenylene ether composition comprises a composition comprising poly (2,6-dialkyl-1,4-phenylene) ether stabilized with a mixture of butylated-hydroxy toluene and triethanolamine.

Included within the disclosure are methods of preparing the stabilizer system and the stabilized polyphenylene ether compositions, as well as molding the stabilized compositions, and the resulting molded products. The compositions after molding provided molded products of significantly increased thermal oxidative stability.

EP 0 111 811 A2

STATEMENT OF THE INVENTION

This invention relates to a novel stabilizer system which inhibits thermal oxidation, and to compositions comprising polyphenylene ethers, also known as polyphenylene oxides (PPO), having incorporated therein a small but effective amount of said stabilizer system to improve the thermal oxidative stability of the polyphenylene ether compositions, that is, to increase their resistance to oxygen containing atmospheres at elevated temperatures. The stabilizer system, in its broad aspects, comprises a combination or mixture of a hindered phenol and a tertiary amine. A preferred embodiment of such a stabilizer system comprises equal parts of the hindered phenol and of the tertiary amine. A preferred example of the hindered phenol is butylated-hydroxy toluene (BHT) and of the tertiary amine triethanolamine (TEA). The system is prepared by mixing together the aforesaid components. A preferred stabilized polyphenylene ether composition comprises a composition made by incorporating a small but effective amount of the mixture of butylatedhydroxy toluene and triethanolamine into a composition comprising a poly(2,6-dialkyl-1,4-phenylene) ether, as for example, poly(2,6-dimethyl-1,4-phenylene)ether.

The invention also includes methods for preparing the stabilizer system, for stabilizing polyphenylene ether compositions with said system, for molding stabilized polyphenylene ether compositions, and also includes the molded products obtained therefrom. The composition after molding provide molded products of significantly increased thermal oxidative stability.

## BACKGROUND OF THE INVENTION

The polyphenylene ethers are known and described in numerous publications including U.S. Patent Nos. 3,306,874 and 3,306,875 of Allan S. Hay and U.S. Patent Nos. 3,257,357 and 3,257,358 of Gelu Stoeff Stamatoff, all incorporated herein by reference. The high molecular weight polyphenylene ethers are high performance engineering thermoplastics possessing relatively high melt viscosities and softening points; i.e., in excess of 250°C., and are useful for many commercial applications requiring high temperature resistance including formation of film, fiber and molded articles.

It is known that the polyphenylene ethers, and particularly the 2,6-dialkyl substituted polyphenylene ethers, are somewhat unstable under the influence of heat and light exposure causing the resin to become dark colored, brittle and undesirable for many uses. The cause of the degradation is not fully understood, but is believed to be due, in part, to the presence of hydroxy groups on the polymer chain, a sensitivity to oxygen-containing atmospheres and the degradative effects of traces of impurities present in the polymer chain.

Heretofore, a large number of different compounds such as the phenolic antioxidants exemplified by p-phenyl phenol, N-steroyl-p-aminophenol and 2,2'-methylene bis(4-ethyl-6-tertiary butylphenol) have been used as heat and light stabilizers for the polyphenylene ether compositions. These stabilizers were generally unsatisfactory for even short exposure to oxygen-containing atmospheres such as air at elevated temperatures.

Other stabilizers have been found for the polyphenylene ethers that provide a substantial improvement in resistance of the polymer to the degradative effects of oxygen. For example, in U.S. Patent No. 3,388,085, there is disclosed a polyphenylene ether composition stabilized with from about 0.1 to 2.0 percent of a 2-mercaptobenzimidazole. In U.S. Patent No. 3,639,334 there is disclosed the stabilization of polyphenylene ethers with either an organic phosphite or a hydramine. Further, U.S. Patent No. 3,420,792 discloses a stabilized polyphenylene ether consisting of a major portion of a polyphenylene ether and a minor portion of a hexalkylophosphoric triamide stabilizer. Other effective stabilizers for the polyphenylene ethers include ketones, various boron compounds, such as boron oxides, various salts of napthonic acid and the like.

In Burnett U.S. Patent No. 3,563,934, there is disclosed the use of an alkanolamine or a morpholine to improve the stability of polyphenylene ethers. In Katchman et al. U.S. Patent No. 3,761,541 there is disclosed the use of a stabilizer combination comprising an alkanolamine in combination with an inorganic sulfide or an organic phosphite, or a mixture thereof.

Though these stabilizers provide effective stabilization of the polyphenylene ethers, new and more effective stabilizer systems are continuously sought.

DESCRIPTION OF THE INVENTION

It has now been found that the stability of polyphenylene ether compositions can be significantly increased by intimately mixing therewith a small but effective amount of a novel stabilizer system which inhibits thermal oxidation, comprising a mixture of a hindered phenol and a tertiary amine.

Examples of hindered phenols are the butylated hydroxytoluenes (BHT) of the formula:

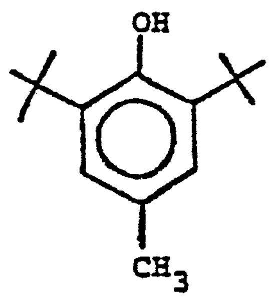

which is also known as 2,6-ditertiarybutyl-4-methyl-phenol or 4-hydroxy-3,5-ditertiarybutyl-toluene.

The tertiary amine employed in the stabilizer system is preferably a lower triakanolamine, for example, triethanolamine, which is especially preferred, or tripropanolamine, tri-isopropanolamine, tributanolamine, or tri-tertiary butanolamine.

As tertiary amines there can also be employed tertiary aliphatic amines of the general formula $NR_1R_2R_3$ wherein $R_1$ and $R_2$ are lower alkyl groups containing 1 to 4 carbon atoms, such as ethyl, methyl, propyl and butyl, and $R_3$ represents $C_nH_{2n+1}$ where n is greater than 8, as for example, nonyl, decyl, hendecyl, dodecyl, etc., the preferred example of such a tertiary amine being

dimethyloctadecylamine.

In preparing the stabilizing system, in general from 20 to 80 parts by weight of hindered phenol and 80 to 20 parts by weight of tertiary amine per 100 parts by weight of hindered phenol and tertiary amine may be used. Preferably the stabilizer system contains equal parts by weight of the hindered phenol and tertiary amine. To stabilize the polyphenylene ether composition from about 0.1 to about 2.0 parts by weight of the total stabilizer system is incorporated per 100 parts by weight of the polyphenylene ether composition.

The combination of the tertiary amine with the hindered phenol substantially increases the resistance of the composition to the degradative effects of oxygen containing atmospheres at elevated temperatures. Improvements greater than 25% have been obtained by employing the novel stabilizer system.

Optionally organic phosphites, and/or inorganic sulfides and/or metal oxides, such as those shown in U.S. Patent No. 3,761,541, which is incorporated herein by reference, can be added to the polyphenylene ether composition stabilized with the stabilizer system of the instant invention, as for example by adding tridecylphosphite (TDP) and/or zinc sulfide, and/or zinc oxide each in an amount of from about 0.1 to about 3.0 parts by weight per 100 parts by weight of the polyphenylene ether.

The composition comprising polyphenylene ether, preferably comprises a composition of polyphenylene ether with polystryene such as disclosed in U.S. Patent No. 3,383,435

and U.S. Patent No. 3,663,654, which are incorporated herein by reference. These compositions typically comprise from about 15 to 50% by weight of polystyrene units, and are available from the General Electric Co. under the trademark NORYL thermoplastic compositions.

The polyphenylene ethers contemplated by the subject invention, in a preferred embodiment, have repeating structural units of the formula:

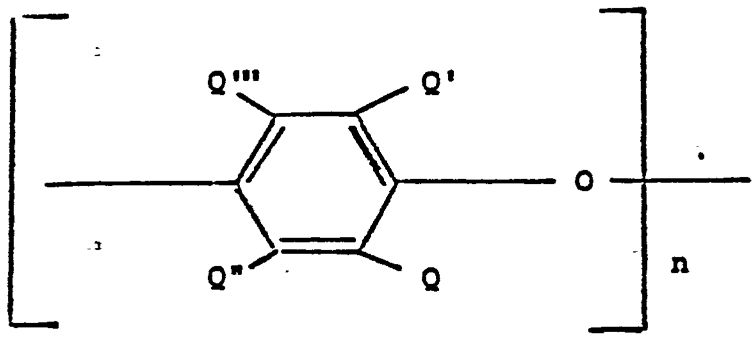

wherein Q, Q', Q" and Q"', are independently selected from the group consisting of hydrogen, hydrocarbon radicals, halohydrocarbon radicals having at least two carbon atoms between the halogen atom and the phenol nucleus, hydrocarbonoxy radicals and halohydrocarbonoxy radicals having at least two carbon atoms between the halogen atom and the phenol nucleus, and Q', Q" and Q"' in addition may be halogen with the proviso that Q and Q' are preferably free of tertiary carbon atom; and n represents the total number of monomer residues and is an integer of at least 50.

Especially preferred is poly(2,6-dimethyl-1,4-phenylene) ether.

The term polyphenylene ether, as used in this disclosure, is intended to include within its scope those polymers represented by the above formula as well as polyphenylene ethers having properties altered by admixture with

other resins. One such polyphenylene ether mixture is disclosed in U.S. Patent No. 3,379,792 incorporated herein by reference wherein the flow properties of the polyphenylene ethers are improved by blending with from about 0.1 to 25 phr by weight of a polyamide. In U.S. Patent No. 3,361,851, there is disclosed a polyphenylene ether composition comprising a polyphenylene ether and a polyolefin. The polyolefin is added to the composition to improve impact strength and resistance to aggressive solvents. In the U.S. Patent No. 3,383,435, there is provided means for simultaneously improving the melt processability of the polyphenylene ethers while simultaneously upgrading many properties of polystyrene. The invention of U.S. Patent 3,383,435 is based upon the discovery that the polyphenylene ethers and the polystyrenes, including the modified polystyrenes, are combinable in all proportions resulting in compositions having many properties improved over those of either of the components. As disclosed in said patent, the polystyrenes combinable with the polyphenylene ether are those having at least 25 percent by weight polymer units derived from a monomer having the formula:

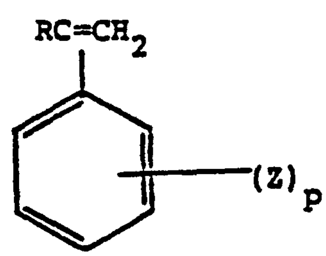

wherein R is hydrogen, (lower)alkyl or halogen; Z is a member selected from the class consisting of vinyl, hydrogen, halogen and (lower)alkyl; and p is 0 or a whole number equal to from 1 to 5. The preferred composition of this patent is a poly(2,6-dialkyl-1,4-phenylene) ether combined with

polystyrene or rubber-modified polystyrenes. "(lower)alkyl" includes 1-6 carbon atoms.

The process for preparing the stabilized polyphenylene ether compositions in general, involves intimately mixing the stabilizer system with the polyphenylene ether composition, then blending the components. Preferably, the polyphenylene ether and the mixture of hindered phenol and tertiary amine are first intimately mixed to form a premix, and the premix is passed through an extruder at an elevated temperature of about 500°F. to about 600°F. The extrudated blend is pelletized and can then be molded into any desired shape, as, for example by injection molding, such as, in a Newbury injection molding machine.

The stabilized compositions of this invention are useful for all purposes for which the polyphenylene ethers have hitherto been used, for example, for conversion to films, fibers, molded articles and the like, by conventional methods.

The stabilized compositions may also contain dyes, pigments, fillers, reinforcing fibers, flame retardants, plasticizers, and the like.

The stabilizer system is used advantageously with polyphenylene ethers per se or in compositions thereto with other additives, and particularly where the applications of such products require the use of high continuous heat and where impact strength and particularly thermal stability might be reduced.

## DESCRIPTION OF THE PREFERRED EMBODIMENTS

The following examples illustrate the invention further and are not to be construed as limiting the invention.

## EXAMPLES 1-3

The composition of the stabilizer system and of the composition of polyphenylene ether with the stabilizer system and the properties of the stabilized polyphenylene ether compositions are summarized in Table I which follows.

In the table, resin means a composition of 55 parts by weight of poly (2,6-dimethyl-1,4-phenylene) ether made from a manganese catalyst system such as that described in U.S. 3,956,242 and having an intrinsic viscosity of about 0.50 dl./g. (measured in chloroform at 30°C); 45 parts by weight of rubber modified high-impact styrene resin (Foster Grant 834 containing about 8% by weight of polybutadiene rubber); 3.5 parts by weight of triphenyl phosphate; 1.5 parts by weight of polyethylene; 1.0 part by weight of tridecylphosphite; 0.15 part by weight of zinc oxide; and 0.15 part by weight zinc sulfide. BHT means butylated-hydroxy toluene namely, 4-hydroxy-3,5-ditertiary butyl-toluene, and TEA means triethanolamine.

The polyphenylene ether resin composition was mixed with the mixtures of BHT and TEA. The compositions were extruded in an extruder at 575°F. and 20-25" vacuum and molded at 530°F. into tensile bar samples. The molded bars were aged at 115°C. and the time required for the samples to become brittle was determined. This was done by placing the bars in an air circulating oven at 115°C., periodically removing samples, cooling to room temperature

0111811

and breaking them under tension in an Instron machine. Samples were considered brittle when they broke without yield. The results are given in the table under the heading "Time to Embrittle (days)".

For comparative purpose, compositions without BHT or TEA or TDP and without the mixture of the BHT and TEA were also prepared and tested in the same manner.

**TABLE I**

**STABILIZED BHT/TEA COMPOSITIONS**

| EXAMPLES | RESIN | BHT (Parts/hundred parts of resin) | TEA (Parts/hundred parts of resin) | Izod | Y.I. | Time to Embrittle (days) |
|---|---|---|---|---|---|---|
| Control | 100 | -- | -- | 4.3 | 22.6 | ~50 |
| 1 | 100 | 1.0 | -- | 5.2 | 20.6 | ~92 |
| 2 | 100 | -- | 0.5 | 4.7 | 25.1 | ~95 |
| 3 | 100 | 0.5 | 0.5 | 5.3 | 24.5 | >119 |

EXAMPLES 4-8

The composition of the stabilizer system and the composition of the polyphenylene ether resin with the stabilizer system and the properties of the stabilized polyphenylene ether compositions are summarized in Table II. The procedure is the same as in Example 1-3, except that dimethyloctadecylamine (DM18D) is substituted for the triethanolamine. The preferred Examples, in addition to the stabilizer system, also contain TDP. Example 8, which omits the TDP, exhibits the least action in improving the thermal oxidative stability.

**TABLE II**

**STABILIZED BHT/tert. Aliphatic Amine COMPOSITIONS**

| EXAMPLES | RESIN | BHT (parts/hundred parts of resin) | DM18D (parts/hundred parts of resin) | Izod | Y.I. | Time to Embrittle (days) |
|---|---|---|---|---|---|---|
| Control | 100 | -- | -- | 4.3 | 22.6 | ~50 |
| 4 | 100 | 1.0 | -- | 5.2 | 20.6 | ~92 |
| 5 | 100 | -- | 1.0 | 5.2 | 21.5 | ~92 |
| 6 | 100 | 1.0 | 1.0 | 5.3 | 20.0 | ~115 |
| 7 | 100 | 0.5 | 0.5 | 5.2 | 22.2 | ~115 |
| 8* | 100 | 0.5 | 0.5 | 5.4 | 24.7 | ~71 |

*Did not contain tridecylphosphite.

From the above Tables I and II, it can be seen that there is a synergistic activity in the stabilizer system or combination of the hindered phenol and the tertiary amine, and that the synergistic effect is further enhanced by the presence of the organic phosphite.

The above noted patents and/or patent applications are incorporated herein by reference. Obviously, other modifications and variations of the present invention are possible in the light of the above teachings. It is, therefore, to be understood that changes may be made in the embodiments of the invention described which are within the full intended scope of the invention as defined by the appended claims.

Claims:

1. A stabilizer system which inhibits thermal oxidation, comprising a mixture of a hindered phenol and a tertiary amine.

2. A stabilizer system as defined in Claim 1, wherein the hindered phenol is butylatedhydroxy toluene.

3. A stabilizer system as defined in Claim 1, wherein the tertiary amine is a trialkanolamine.

4. A stabilizer system as defined in Claim 1, wherein the tertiary amine is a tertiary aliphatic amine of the general formula, $NR_1R_2R_3$ where R, and $R_2$ are lower alkyl groups containing 1 to 4 carbon atoms, and $R_3$ represents $C_nH_{2n+1}$ where n is greater than 8.

5. A stabilizer system as defined in Claim 1, wherein the tertiary amine is dimethyloctadecylamine.

6. A stabilizer system as defined in Claim 1, wherein the hindered phenol is (a) butylatedhydroxy toluene and the tertiary amine is (b) triethanolamine or dimethyloctadecyl-amine, (a) and (b) being present in equal amounts in the mixture.

7. A stabilized polyphenylene ether composition comprising a polyphenylene ether, a styrene resin and a stabilizing quantity of the stabilizer system as defined in Claim 1.

8. A stabilized polyphenylene ether composition as defined in Claim 8, wherein the polyphenylene ether is of the formula:

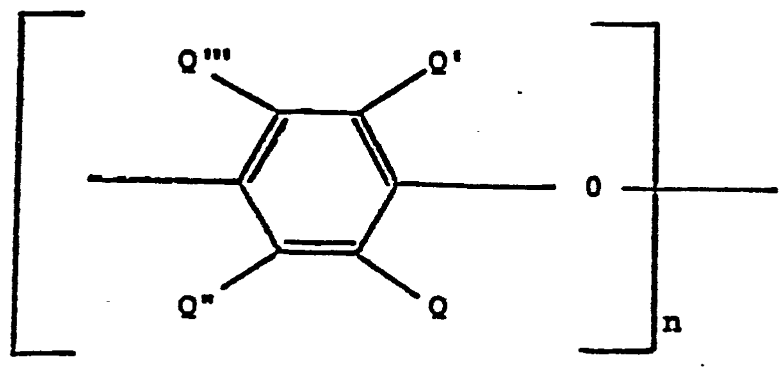

9. A stabilized polyphenylene ether composition as defined in Claim 7, wherein the polyphenylene ether component is a poly(2,6-dialkyl-1,4-phenylene) ether.

10. A stabilized polyphenylene ether composition as defined in Claim 7, wherein the polyphenylene ether component is poly(2,6-dimethyl-1,4-phenylene) ether, and the styrene resin is rubber modified high-impact polystyrene.

11. A stabilized polyphenylene ether composition as defined in Claim 7, wherein the hindered phenol is butylatedhydroxy toluene.

12. A stabilized polyphenylene ether composition as defined in Claim 7, wherein the tertiary amine is trialkanolamine.

13. A stabilized polyphenylene ether composition as defined in Claim 7, wherein the tertiary amine is triethanolamine.

14. A stabilized polyphenylene ether composition as defined in Claim 7, wherein the tertiary amine is of the general formula $NR_1R_2R_3$ where $R_1$ and $R_2$ are lower alkyl groups containing 1 to 4 carbon atoms, and $R_3$ represents $C_nH_{2n+1}$ where n is greater than 8.

15. A stabilized polyphenylene ether composition as defined in Claim 14, wherein the tertiary amine is dimethyloctadecylamine.

16. A stabilized polyphenylene ether composition as defined in Claim 7, wherein said stabilizer system comprises from about 0.1 to about 2.0 parts by weight per 100 parts by weight of the polyphenylene ether composition.

17. A stabilized polyphenylene ether composition as defined in Claim 7, wherein the hindered phenol is (a) butylatedhydroxy toluene and the tertiary amine is (b) triethanolamine or dimethyloctadecylamine, the mixture of (a) and (b) together comprising from about 0.1 to 2.0 parts by weight per 100 parts by weight of the polyphenylene ether composition.

18. A stabilized polyphenylene ether composition as defined in Claim 7, which includes from about 0.1 to about 3.0 parts by weight of an organic phosphite per hundred parts by weight of the polyphenylene ether composition.

19. A stabilized composition as defined in Claim 18, wherein the organic phosphite is tridecylphosphite.

20. A molded composition having significantly improved thermal oxidative stability obtained by molding the composition of Claim 7.

21. A molded composition having significantly improved thermal oxidative stability obtained by molding the composition of Claim 17.

22. A process for preparing the stabilized composition described in Claim 7, which comprises intimately mixing the polyphenylene ether with the stabilizer system and blending the mixture.

23. A process as defined in Claim 22, wherein the blended product is molded into any desired shape.

24. A process for preparing the stabilizer system described in Claim 1, which comprises mixing together the hindered phenol and the tertiary amine.